(19)

Europäisches
Patentamt
European
Patent Office
Office européen
des brevets

(11) **EP 2 535 822 A2**

(12) **EUROPEAN PATENT APPLICATION**

(43) Date of publication:
**19.12.2012 Bulletin 2012/51**

(21) Application number: **12171800.1**

(22) Date of filing: **13.06.2012**

(51) Int Cl.:
***G06F 17/27*** (2006.01)     ***G06F 17/28*** (2006.01)
***G06F 17/30*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.06.2011 EP 11169673**

(71) Applicants:
  • **The Provost, Fellows, Foundation Scholars, & the other members of Board, of the College of the Holy
    & Undiv. Trinity of Queen Elizabeth near Dublin
    Dublin 2 (IE)**
  • **Digital Linguistics Limited
    Bray, Co. Wicklow (IE)**

(72) Inventors:
  • **Vogel, Carl
    Dublin, D2 (IE)**

  • **Lewis, David
    Co. Wicklow, Bray (IE)**
  • **Lynch, Gerard
    Dublin, D3 (IE)**
  • **Medori, Julia
    Corsica (FR)**
  • **Mamani Sanchez, Liliana
    Dublin, D3 (IE)**
  • **McCombe, Niamh
    Co. Derry (GB)**
  • **Ritchie, Phil
    Co. Wicklow, Bray (IE)**

(74) Representative: **Lucey, Michael
    PURDYLUCEY
    Intellectual Property
    Suite 138-139
    The Chapel Building
    Mary's Abbey
    Dublin 7 (IE)**

(54) **Data processing system and method for assessing quality of a translation**

(57)    The invention provides a data processing system and method for analysing text. The invention uses statistical text classification techniques to assist with the quality assurance of translated texts by using a one pass analysis technique and calculating and ranking probed texts with a dissimilarity score. The use of ranked items to direct, inform, guide and assist human reviewers, auditors, proof-readers, post-editors and evaluators of the accuracy of the translation. The invention provides a significant time saving and accuracy of assessing document's adherence to an enterprises corporate messaging and authoring standards and provides for a level of automated quality assurance within automated translation workflows.

Figure 1a

EP 2 535 822 A2

**(Cont. next page)**

**Figure 1b**

**Description**

**Field of the Invention**

The invention relates to a data processing system and method. In particular the invention relates to data processing for text classification and/or analysing linguistic style of a text for accuracy and/or stylistic quality assurance of translated content.

**Background to the Invention**

The volumes of translated content from one language to another continue to increase at a rapid rate. Companies realise the necessity and importance of translation and localisation for the success of product placement and brand recognition in large and growing non-domestic economies. The drive of these organisations is to reach these markets quickly. The current compromise of large volume versus short time scales (and frugal budgets) is to employ machine translation for data processing and/or large numbers of human translators/post-editors in tandem with a cursory human review/quality assurance step.

A problem with this approach is that the review step is often of only randomly chosen portions of the translated documents (or subset of documents from a larger set): coverage of the documents is therefore often incomplete and the process is fallible. The result is that poor translations, which can hurt brand integrity, are published because they were not selected for review.

Some past work on linguistic quality analysis have used statistical methods in various locations within the problem. For example, some work targets identifying what proportions of errors are made by individuals as a function of whether they are speakers of standard or non-standard dialects (Hagen et al., 2001; Johannessen et al., 2002; Nerbonne and Wiersma, 2006). The method of Nerbonne and Wiersma (2006), for example, fixes on part of speech assignments to words used, and deploys computationally intensive permutation tests to assess significant differences in distributions between native speakers of Australian English and Finnish emigrant Australian English. Some work uses corpus driven analysis in order to locate gaps in hand crafted precision grammars (which may be thought of as "rule-based", in contrast to stochastic grammars) (Baldwin et al., 2005). Primarily rule-based systems may contain components which are driven by statistical information--for example, a grammar checker by Knutsson (2001) has a component which guesses part of speech information to assign to words on the basis of statistical information, but a rule oriented component for constructing linguistic generalizations. Grammar checkers have also been used for assessing translation outputs, at least in the case of machine translation: Stymne and Ahrenberg (2010) use the grammar checker of Knutsson (2001) for this purpose, conducting error analysis of machine translation output.

Linguistic error analysis has been an explicit goal of some research, irrespective of the linguistic source (see e.g. Foster and Vogel (2004)). Stochastic grammars have also been developed for the specific purpose of grammar checking; however, work like that of Alam et al. (2006) ultimately presupposes a binary view of grammaticality, and records as grammatical evidently any sentence which has greater than zero probability according to the language model (they deploy no smoothing techniques). Similarly, Henrich and Reuter (2009) exploit the fact also exploited in the work here that a purely statistically driven system may be language independent; however, their notion of grammaticality is still binary in that token sequences which do not occur in their equivalent of the reference corpus results in ungrammaticality. On the other hand, much work in linguistic theory presupposes (Ross, 2004, (orig. 1973)) or explores a more graded notion of grammaticality (Vogel and Cooper, 1994; Frank et al., 1998; Aarts et al., 2004; Crocker and Keller, 2006; Fanselow et al., 2006) (including gradience in syntactic category/part of speech assignment (Aarts, 2007)).

A paper published by Carl Vogel et al entitled 'Computational Stylometry: Who's in a Play?" 29 October 2007, Verbal and Nonverbal Features of Human-Human and Human-Machine Interaction, Springer Berlin Heidelberg, Berlin, Pages 169-186, ISBN: 978-3-540-70871-1 discloses a system and method of analysis developed to approach problems of authorship attribution such as found in forensic linguistics, but applied instead to stylistic analysis within the critical theory of characterization in fiction, particularly drama. The role of a probe category (category under investigation) is as a set of items to be classified as being most similar to either a putatively homogenous probe category (that is, its similarity to other texts within the same content set), or with one of the competing reference categories. The probe category is also ranked with respect to itself as part of the calculation of category homogeneity: there, one is asking whether some part of the probe category really fits best with the probe category or better within some other category, as is appropriate to the task of estimating the provenance of each item within some set. In other words one wishes to know which items are most similar to the reference material. However this approach is not suitable for analysing linguistic style of a text for accuracy or stylistic quality assurance of translated content of text because it only teaches which category of texts the probe most likely belongs to. Moreover Vogel *et al* 2007 teaches that in trying to assess the best category in which to place a text being probed, one first calculates the overall homogeneity of all of the candidate categories and this essentially involves comparisons of all items with all other items (probe items = p, reference items = r; comparisons = O((p+r)**2)). However a problem with this approach is that it is computationally intensive process and therefore not attractive in terms of time complexity.

Other publications in the field include US patent publication number US2006/142993 and US patent number US4,418,951, however these publications, similar to Vogel et al described above, disclose how to determine the best categorization for a set items being probed from among a set of competing category labels which are not suitable for analysing linguistic style of a text for accuracy or stylistic quality assurance of translated content of text.

It is an object of the invention to provide a data processing system and method to overcome at least one of the above mentioned problems.

## Summary of the Invention

According to the invention there is provided, as set out in the appended claims, a data processing system for analysing text comprising:

means for modelling two sets of texts comprising a first model derived from a set of reference texts and a second model derived from a set of texts being probed; and

means for comparing text items from the set of texts being probed with reference texts from the set of reference texts using a computationally efficient one pass analysis to provide raw dissimilarity scores; and means for classifying the probe texts from the raw dissimilarity scores.

It will be appreciated that the invention provides a number of advantages, namely:

1. does not require a computation of self- (internal) homogeneity;
2. reduces the number of comparison computations by utilising the one pass analysis;
3. provides a measure of divergence (non-conformity) of texts under investigation (probe) from the reference texts;
4. facilitates the use of any suitable divergence metric between two items;
5. optionally utilizes an empirical threshold below which probe items are deemed inaccurate, poor quality and/or requiring human assessment and/or correction;
6. rankings of text items are obtained by examining their scores in comparisons of those items with reference texts, using distributions of any number and combination of features explicit or implicit in the texts. Rankings express the extent to which the newly translated texts diverge from the reference corpus and thus infer inaccuracy, non-conformance and/or stylistic deviance.

The method and system as disclosed herein is based on simple distribution analysis and efficient one-pass processing which involves the assessment of homogeneity of textual categories. The invention uses statistical text classification techniques to assist with the quality assurance of translated texts.

The use of ranked items to direct, inform, guide and assist human reviewers, auditors, proof-readers, post-editors and evaluators of the accuracy of the translation. The invention provides a significant time saving and improved accuracy of assessing document's adherence to an enterprises corporate messaging and published content standards and provides for a level of automated quality assurance within automated translation workflows. The invention provides a method for the efficient assessment of a texts' adherence to, and divergence from, a reference corpora or coded set of linguistic features. The invention mitigates these risks by identifying translations of low stylistic conformance and directing reviewers, proof-readers and editors to these sections. Similarly, the invention can provide scores for whole documents in a fully automated process.

In one embodiment said one-pass analysis on the set of texts being probed determines the degree of divergence from at least one reference text from the set of reference texts.

In one embodiment said means for classifying further comprises ranking the degree of divergence of texts being probed from the set of reference texts using said dissimilarity scores.

In one embodiment said means for classifying comprises means for setting an empirical threshold value such that probed text items with a dissimilarity score with a higher value are texts deemed inaccurate, stylistically deviant, poor quality and/or requiring human assessment and/or correction.

Another aspect of the invention is that the reference sub-categories each contribute constituent rankings, as described in more detail below. The probed items are ranked among each other with respect to their dissimilarity to subcategories, and the overall ranking of items is essentially the average of each of the rankings of probe items against subcategories. This is a fundamentally different use of the rankings used in prior art methodologies.

In one embodiment rank order a body of texts with respect to a corpus of reference texts is provided, according to one or more rankings (or aggregate rankings) of dissimilarity scores, using a chi-squared ratio, or a comparable dissimilarity metric.

In one embodiment the least-ranked elements (below an arbitrary cut-off, determined empirically for the task at hand) of the ranking of items probed with respect to the reference corpus provide the optimal place to target time consuming manual quality inspection.

In one embodiment the method involves quality assessment of all items in the document or corpus probed, but makes it possible to focus manual analysis on the least conforming items, where conformity is assessed and ranked according to the method.

In one embodiment the method supports identification of anomalous sub-categories within the reference corpus, in that the intermediate outputs of the method indicate item rank by sub-category, in addition to the absolute final rank of probed items.

In one embodiment there is provided means for comparing distributions of any number and combination of explicit or implicit features between two texts, and then aggregating such comparisons across categories.

In one embodiment the text item comprises a token, for example a word bigram, such that two texts are subjected to a symmetric comparison of the number of observed and expected occurrences of each type of token in each of the two texts.

In one embodiment there is provided means for calculating a suitable dissimilarity metric, for example average chi-square over all of the compared tokens that occur in both texts.

In one embodiment there is provided means for aggregating scores by comparing a text with a range of texts, or a range of texts to be probed with a range of reference texts.

In one embodiment the texts may comprise whole documents or part of a document.

In one embodiment the use of ranked items are displayed within a graphical user interface (in a filtered, colour graduated, heat map, topographical display) to illustrate and emphasise areas of non-conformance.

In another embodiment there is provided a method of processing data for analysing text comprising the steps of:

modelling two sets of texts comprising a first model derived from a set of reference texts and a second model derived from a set of texts being probed; and

comparing text items from the set of texts being probed with reference texts from the set of reference texts using a computationally efficient one pass analysis to provide raw dissimilarity scores; and classifying the probe texts from the raw dissimilarity scores.

In one embodiment said one-pass analysis on the set of texts being probed determines the degree of divergence from at least one reference text from the set of reference texts.

In one embodiment said classifying step further comprises ranking the degree of divergence of texts being probed from the set of reference texts using said dissimilarity scores.

In one embodiment said classifying step further comprises setting an empirical threshold value such that probed text items with a dissimilarity score with a higher value are texts deemed inaccurate, stylistically deviant, non-conformant, poor quality and/or requiring human assessment and/or correction and/or wherein said comparing step comprises comparing distributions of features between at least one probe text and at least one reference text, and then aggregating such comparisons across different categories.

In a further embodiment there is provided a method of processing data for analysing text comprising the steps of:

using a one-pass analysis of a set of text items to be probed and processing said texts by ranking items with respect to a set of categories of reference texts;

computing a dissimilarity score between probed texts and said reference texts.

In one embodiment there is provided the step of comparing distributions of features between two texts, and then aggregating such comparisons across categories.

In one embodiment the text item comprises a token, for example a word bigram, such that two texts are subjected to a symmetric comparison of the number of observed and expected occurrences of each type of token in each of the two texts.

In one embodiment there is provided the step of calculating average chi-square over all of the compared tokens that occur in both texts.

In one embodiment there is provided the step of aggregating scores by comparing a text with a range of texts, or a range of texts to be probed with a range of reference texts.

In one embodiment texts may comprise a whole documents or part of a document.

There is also provided a computer program comprising program instructions for causing a computer program to carry out the above method which may be embodied on a record medium, carrier signal, digitally encoded and loadable set of computer program execution statements or read-only memory.

## Brief Description of the Drawings

The invention will be more clearly understood from the following description of an embodiment thereof, given by way of example only, with reference to the accompanying drawings, in which:-

Figure 1a and 1b illustrates a system architecture and data flow according to one embodiment of the invention;
Figure 2 illustrates how items are ranked and merged according to one aspect of the invention;
Figure 3 illustrates an example of the invention in operation; and
Figure 4 illustrates an example hardware embodiment configured to perform the analysing of text, according to one embodiment of the invention.

## Detailed Description of the Drawings

In this specification the following terms should be interpreted as per the following:

**"Quality Assurance"** means the analysis, assessment, measurement and recording of a texts' semantic, syntactic and stylistic adherence to, or divergence from, a reference corpora, set of linguistic features, specification or characteristics.

**"Review"** means the processes of carrying out Quality Assurance conformance checks by auditing, proof-reading, reviewing, post-editing, editing, amending and/or correcting activities.

**"Translated Content"** means text of any kind and form regardless of format, representation and encoding, of any terrestrial language that has been translated, transcribed, interpreted or otherwise converted from an original source authored language by human or computational methods. For the avoidance of doubt, this includes English where it has been translated from a different source language, It also includes translations produced by entirely human, mechanical, computer assisted, partially automated and fully automated processes.

**"Dissimilarity"** means the degree to which the set of probe texts are deemed to be compositionally divergent, non-conformant and/or stylistically deviant from the set of reference texts.

**"Probe"** means a text or set of texts under investigation and of primary interest within the output of the system and method.

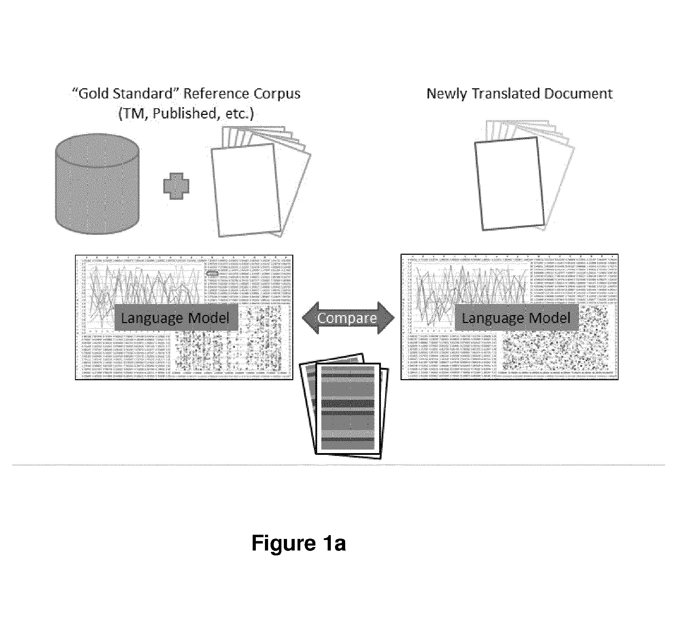

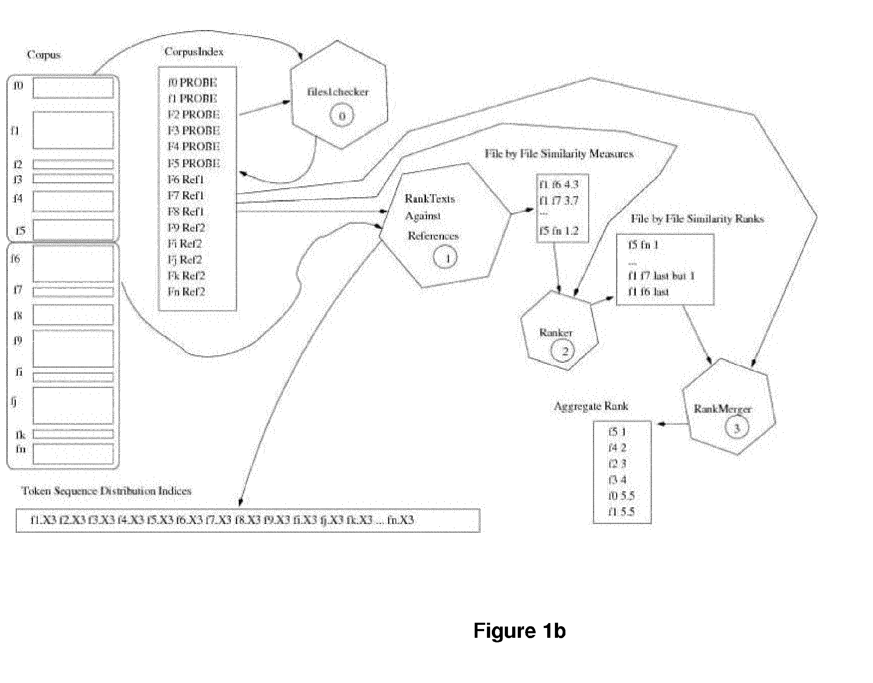

Referring now to the Figures and initially Figure 1a & 1b, Figure 1a and 1b demonstrates the steps in the analytical process, according to one embodiment of the invention. The data processing system for analysing text comprising means for modelling two sets of texts comprising a first model derived from a set of reference texts and a second model derived from a set of texts being probed, as shown in Figure 1a. In Figure 1b the hexagons denote processes that require implementation and are in some cases (hexagon-1) composites of further processes, described in more detail below. The rectangular boxes mark data files either presumed as inputs (e.g. the corpus, or the corpus index) or generated as important outputs (e.g. the frequency distribution index of the corpus according to the tokenization and sequence length adopted, the file by file dissimilarity measures, the file by file dissimilarity ranks, the aggregated rank of probed items across the reference categories). In the figure, the "X3" is meant to indicate that trigrams of some sort of tokenization has been applied (e.g. X = "w" signals word tokenization; X = "w!" indicates word tokenization with punctuation included as tokens; etc.). Other auxiliary information can be included in the output of some of the analysis.

### Input Types and Data Types

Corpora to be analyzed using one embodiment of these methods are presumed to be presented in raw textual format. If one is ranking sentences in a document then they are to be individuated as separate files, with an index maintained of each. As such, the scale of corpora to be ranked using these methods is variable - a corpus of documents can be ranked against other documents, or sentences within a document may be ranked.
The index of documents must contain the name of each file to be considered and an indication of whether it is a probe text or a reference text by providing a first model of reference texts and a second model of texts to be probed. Reference corpus may contain arbitrarily many subcategories. The ranking is conducted in three steps, and these steps construct outputs that become inputs to later parts of the analysis. Certain input parameters influence behaviour (e.g. "-z", in the context of the main scripts signals that punctuation is taken into account as distinct tokens).
In another embodiment of these system and method the corpora to be analysed can be treated as text records, datasets or large volumes of varying levels of textual granularity: that is, sentences, paragraphs, sections, chapters and/or documents.

Outputs

The primary output of interest is the aggregate ranking of each of the input probed items against the totality of the reference corpus. It is noted that the reference corpus may be comprised of sub-categories, and each of the input files is considered with respect to each of these categories in producing the aggregate ranking. In any case, any probe file is compared against all reference files, and ultimately it is necessary to construct an aggregated rank for each probe file on the basis of all its reference set comparisons.

In one embodiment aggregate rankings are constructed on the basis of preliminary rankings rather than on raw dissimilarity scores. This is because the rankings do not preserve distance between two items, but the distance recorded by the dissimilarity scores depends on the nature of each subcategory of reference items. However, any dissimilarity metric between two items may be substituted in place of this particular computation. For example, one might wish to think of documents as vectors, with an index for each token-sequence that might occur, given the analysis chosen, and then examine the cosine between vector representations of two items. One might wish to substitute other more holistic metrics of raw dissimilarity between items as well. The system provides a means for comparing text items from the set of texts being probed with reference texts from the set of reference texts using a computationally efficient one pass analysis to provide raw dissimilarity scores; and means for classifying the probe texts from the raw dissimilarity scores.

Processing Requirements

It is useful to verify that the index of files in the probe and in the reference are adequately populated with respect to tokenization in terms of words, and sequences of them. The main input parameters are the index label and the value that counts as a zero. That is, if one is processing using n-grams, then any file with n-1 tokens effectively has zero content. A secondary parameter allows automatic adjustment of the index to construct a new index eliminating items with effectively zero content. A sample perl implementation of this script for integrity checking can be used.

Driving computations

In the first instance, it is necessary to assess frequency distributions with respect to the token sequence length of interest across the entire corpus of items being considered.

Given an index of items which indicates for each item whether it is a probe item or, if not, what reference category it belongs to from the initial models (and presuming that the integrity of this index has been checked so that less error checking is necessary during the processing of the items); and a further indexing of those items which records the total distribution of token sequences contained in each item: compute the average dissimilarity score for each probe item in comparison with each reference item, recording these dissimilarity scores (optionally, where divergences cross a significance threshold, record those anomalous component comparisons).

Average dissimilarity score

The process hereinbefore described details the use of average $X^2$ ratio as the metric of dissimilarity between two items. It is important to reiterate that the method could substitute an alternative method of computing divergence between items. Whichever dissimilarity metric is used, the computation, as depicted in the system architecture and data-flow diagram of Figure 1 is located in the hexagon with the label, "Rank Texts against References" (hexagon-1). The computation of a similarity score between two items using the $X^2$ ratio involves considering the total distribution of token sequences that occur in both items. For each token sequence that occurs in either item, one computes the $X^2$ score, and the dissimilarity score for the two items is the average of these individual token sequence comparisons. A single token sequence comparison (e.g. word unigram) considers the observed frequency of the token sequence in the one item and its observed frequency in the other item, in relation to the expected frequency of the token sequence in each of those items. The expected frequency of the token sequence is determined by the total number of token sequences that comprise the item. Thus, one is essentially considering a series of two by two contingency tables, one for each token sequence that is instantiated by the comparison of two items. See Table 1, for example: represents the token sequence of focus for the table, and represents the occurrences of each token sequence that is not the token sequence. A comparable table of expected values is derived from the observed values.

Table 1: Table of observations for a single token $\tau$

| Observations of Token Sequence | Item 1 | Item 2 | Total Across Items |
|---|---|---|---|
| $\tau$ | a | b | a + b |
| $\tau$ | c | d | c + d |
| | a + c | b + d | n = a + b + c + d |

If one imagines the first row of Table 1 as defining a function o ( ), then o( , 0) and o( , 1) pick out the observed values for in the first and second items, respectively, and Table 2 provides the method of computing the expected values on the basis of the observed values and in relation to the total size of the two items being compared.

$$(1) \qquad \chi^2 = \frac{(o(\tau,0) - e(\tau,0))^2}{e(\tau,0)} + \frac{(o(\tau,1) - e(\tau,1))^2}{e(\tau,1)}$$

Table 2: Table of expected values for a single token sequence $\tau$

| Expected In- stances of Token Sequence | Item 1 | Item 2 | Total Across Items |
|---|---|---|---|
| $\tau$ | (a+b)*((a+c)/n) | (a+b)*((b+d)/n) | |

In a preferred embodiment the method carries a cumulative sum of the $X^2$ values for each token sequence inspected between two items, and then divides by the total number of distinct values for (N). Note that this value, minus one (N-1), is the equivalent of the degrees of freedom for the overall contingency table of observations of each , and "chi by degrees of freedom" refers to a method rather like this one, but with the divisor set to be N-1 rather than N.

This accumulation of scores for the individual provides an aggregate similarity measure for the item. However, using the assumptions of the $X^2$ test from inferential statistics, one can also comment along the way on whether the distribution of in two items being compared is significantly different indications of distinctive token sequences, and in aggregation, distinctive items, are derivable for other similarity metrics one might use, as well.

Setting a critical value for $X^2$ according to a probability of making an error of judgement to the effect that the two items sampled are not from the same population when in fact they are (i.e. the probability of being wrong in concluding that the items are significantly different with respect to some ), if the number of observations is at least 5 in both cells, then it is appropriate to signal that an anomalous token sequence within the comparison of items has been identified.

The process involves comparing each of the items in the probe category (P) with each of the reference items (R), and thus involves O(P * R) item level comparisons. Other sorts of processes that are useful to compose using the same dissimilarity score (but focus on the reverse ordering of the resulting ranked comparisons), in assessing the homogeneity of each category and sub-category being analyzed, for example, require O((P * R)^2) item-level comparisons. However, reversing ranking and reducing the number of comparisons is not sufficient to achieve the goal of identifying diverging probe tests. Thus, there are advantages to using the methods described here for text analysis problems that permit the efficient processing provided.

Rank

Note that ranking involves a standard treatment for assigning ranks to ties if there are ties between ranks i and j (j > i), then assign to all such comparisons the rank ((i+j)/ k) where k is the number of tied comparisons. This preserves the rank-sum property, namely that the sum of the ranks of the items in a ranked list of n items should be equal to n(n+1) /2 .

Given an index of items which indicates for each item whether it is a probe item or, if not, what reference category it belongs to; and further given a sorted set of raw dissimilarity scores that emerge from item by item comparisons: for each item by item comparison rank comparisons in relation to all other pairwise comparisons. This ranking is insensitive to reference sub-categories in as much as they are not treated separately in this step. Each comparison involves one probe item and one reference item, and each probe item has a score with respect to each reference item. This step adds rank information in satisfaction of the rank-sum property just described to the raw dissimilarity scores obtained for each item by item comparison, according to the divergence metric and tokenization sequence.

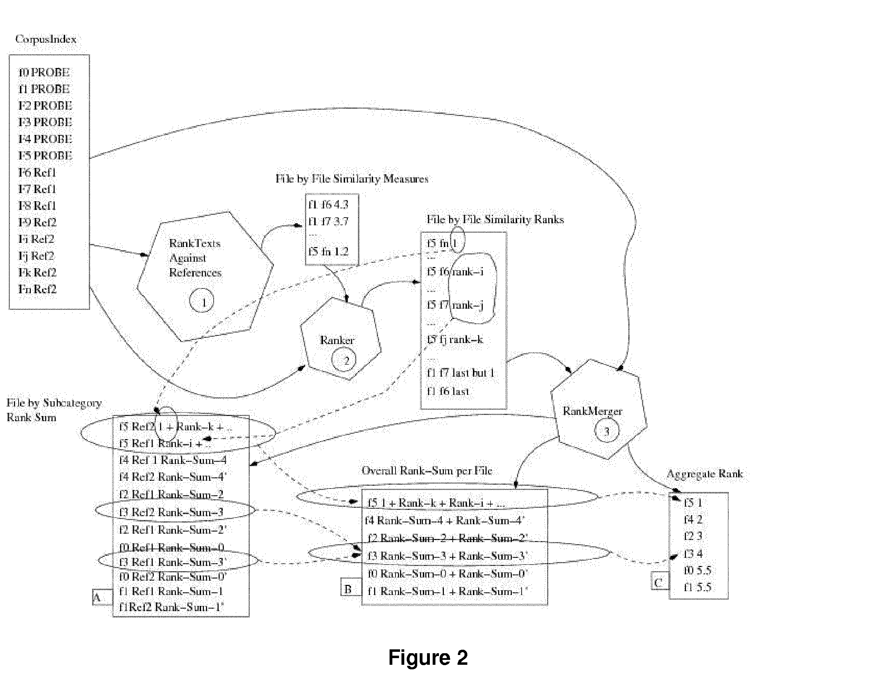

In Figure 2 the output of this process is the file-by file rankings in the rectangular box between hexagon-2 (for the ranker) and hexagon-3 (for rank-merging). Note that this figure is an expansion of a subset of Figure 1. Figure 2 omits mention of the individual items in both probe category and each reference sub-category; it also omits the tokenized index of the individual items output from the preparatory phases of the processes that computes file-by-file similarity scores (hexagon-1). Only one pass through these files and the indices is necessary using this method. The focus is, rather, on the ranker (hexagon-2) and the rank- merger (hexagon-3).

The output of this ranking is reduced further in two directions. Firstly, one wants to know the rank of each probe item not just with respect to each reference item as much as with respect to each reference category. Secondly, one typically wants to abstract over this and assess each probe item in terms of its ranking across each of the reference categories.

Aggregate Rank Merge

Given an index of items which indicates for each item whether it is a probe item or, if not, what reference category it belongs to. In Figure 2, this is the Corpus Index box at the left of the figure, and is further given a ranked set of raw similarity scores that emerge from item by item comparisons: This is the output of the ranker for each reference category, rank each comparison in relation to the other comparisons for that reference category; and construct an aggregate rank of probe items across the reference categories. In Figure 2, this is the rectangle with the tab-label "A". The dotted line from the output of the ranker to items within this rectangle is meant to illustrate the process: the rank of an item with respect to a sub category depends on the sum of the item's rank on the basis of each item in the sub-category; so, the most similar two files were f5 and fn, the latter of which is a member of f2, and this contributes the value 1 to rank sum for f5 with Ref2, and the comparison of f5 with fj contributes the value rank-k, and so on. This is the final ranked list of outputs, in Figure 2, the rectangle with the tab-label "C".

It would be natural to consider taking the input sorted and ranked raw dissimilarity scores that derive from comparisons of items, and aggregating those dissimilarity scores directly. However, it is not clear whether the mathematical operations presupposed in the direct aggregation of raw scores retains face validity. One may produce a distance-preserving aggregation of similarity of items with other items into similarity of items with subcategories and then with the overall reference category. The raw scores record the distance between comparisons, and this is exactly what is lost in abstracting raw scores into ranks. An issue is that the relative distances obtained by dissimilarity scores change scales between items because the pairs of items may contain different numbers of tokens sequences. It is natural enough to average the similarity scores for token sequence distributions within an item by item comparison, but the motivation for averaging across item by item comparison is not clearly valid for all metrics of divergence.

While the distance between points in comparisons across a sub-category or across the entire reference corpus is not obviously open to normalization that preserves metric properties, the rank ordering of comparisons does preserve information. Therefore, for each probe item, and for each reference sub-category, the sum of the ranks obtained for the probe item paired with each of the items in the reference sub-category is computed (this is depicted in the rectangle with the tab-label "A", in Figure 2). It is reasonable to think of this as the probe item's rank sum within each sub-category. Thus, one has the information which can be sorted and handed on to rank each probe item with respect to the other probe items in the context of each reference sub-category. Then, for each probe item, the sum of its rank-sums across reference sub-categories is computed (this is depicted in the rectangle with the tab-label "B", in Figure 2; notice that the rank of f5 with respect to Ref1 and Ref2 are added together, as shown by the values enclosed in by an ellipse in "A" and connected by a dashed arrow to "B"). This models the probe item's rank sum across each sub-category. These sum-of-rank scores are sorted then handed on to be ranked in satisfaction of the rank-sum property (this is depicted in the rectangle with the tab-label "C", in Figure 2). This is the effective output of the method of analysis.

Detailing a straightforward variant of this method perhaps makes more clear what the method amounts to: it would have been possible, further, to additionally construct the average rank position for each item by simply dividing the sum-of-ranks by the total number of reference sub-categories, and handing this information on for ranking to satisfy the rank-sum property again. The base method explored here constructs scores simply through sum-of-rank information rather than dividing that by the total number in the relativization that would yield an average.

It will be appreciated that the method of aggregating information across sub-categories of reference texts nor into an overall ranking of items aggregating sub-category ranks along the lines specified above.

In deploying the methods described here, it is necessary to amass a body of suitable reference texts for the task at hand. In the case of translation quality control, the reference texts would consist of documents in the target language deemed to be of an acceptable standard for comparison. It is not necessary that there be a codified "house style". It is also necessary to take the item that is being subjected to a quality-control analysis. The item may be a class of documents or a decomposition of a single document into constituent parts (paragraphs or sentences provide natural decompositions). On a model in which one decomposes a larger text into the sentences it contains, the method instantiates a sentence-level statistical style and grammar checker for the document.

Example Implementation

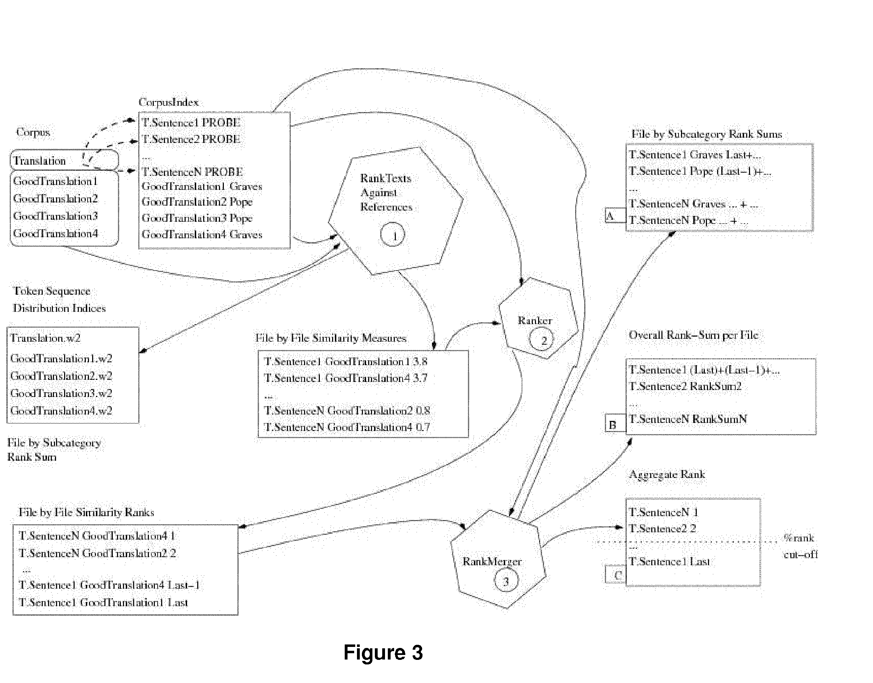

Suppose, for example as shown in Figure 3, that a new translation of The Odyssey is offered. In evaluating it, one might decompose it into N segments corresponding more or less to sentences. One might compare this new translation with the translations of the Greek epics by Robert Graves and Alexander Pope. It does not matter particularly that The Iliad is a distinct poem, and it would not matter enormously if Pope's translation were actually in prose. The method as constructed supports the identification of the j of the N segments below a cut-off point in the ranking which are least similar to the overall corpus of translations of Greek epics into English. In empirical tests using translations into Russian of corporate material, the inventor identified the bottom 40% of the items ranked as a good place to look for candidate items in need of further examination of quality as translations.

It is a separate matter that one can identify which sub-categories of the reference material are less like the others, using the outputs of the proposed method of analysis. This is an important aspect of the invention in assessing the reference material on hand.

In the example depicted in Figure 3, the initial data-verification step is not shown. The figure intends to illustrate the process of assembling a reference corpus and decomposing a document to be probed into files for individual items within the document (the upper left of the diagram), through the analytical steps described herein, towards the ranking of the items probed and determination of a subset of those items below a cut-off point which merit, closer inspection for conformity with respect to the reference corpus.

The analysis, described above, depends fundamentally on comparing distributions of features between two texts, and then aggregating such comparisons across categories. Having decided on a sort of feature to consider as tokens, say word bigrams, then two texts are subjected to a symmetric comparison of the number of observed and "expected" occurrences of each type of token in each of the two texts. The normal preconditions on the use of the chi-squared ratio from inferential statistics are disregarded: the task is not with the aim of establishing that two texts are dissimilar enough to have been drawn from different populations but to measure how similar they are. Thus, zero frequencies for tokens in one document that occur in the other are tolerated. An average chi-square is computed over all of the token types that occur in both documents, and aggregate scores are computed where the problem generalizes to comparing a text with a range of texts, and then a range of texts to be probed with a range of reference texts. Texts may be individuated as documents or parts of documents.

The chi-square scores are ratios, and thus provide an ordering for which the distance between points is meaningful. This ordering informs simpler rankings in which the distance between points is dis-regarded, but which supports reasoning with non-parametric statistics. Reasoning may be conducted with respect to either ordering of items (the ratio ordering or the ranks).

In a second embodiment of the invention there is provided a system and method for processing translated texts to determine the accuracy of the translation from a linguistic point of view, using the methodology described above.

Linguistic style checking is conducted on the basis of statistical analysis rather than based on rules. The statistical analysis is informed by comparing texts to be analyzed with categories of texts that serve as references. This can be used in the context of a business process that identifies texts that require further manual inspection. In particular, in translation services contexts, the volume of text involved is such that a standard practice is to provide quality assurance by reviewing only a subset of a job, manually.

Using the system and method of the invention, the entirety of a job can be automatically inspected using an efficient analysis that explores distributions of any number and combination of linguistic features in the job being probed in comparison to distributions of the features in reference corpora. In one embodiment the feature distribution deployed is based on bigrams composed from words (and punctuation symbols) as they occur naturally in texts (texts are treated as if they are bags of such bigrams).

In a second implementation the method of the invention can be realized as a set of parallel computations using "big data" techniques such as MapReduce.

Example Deployment

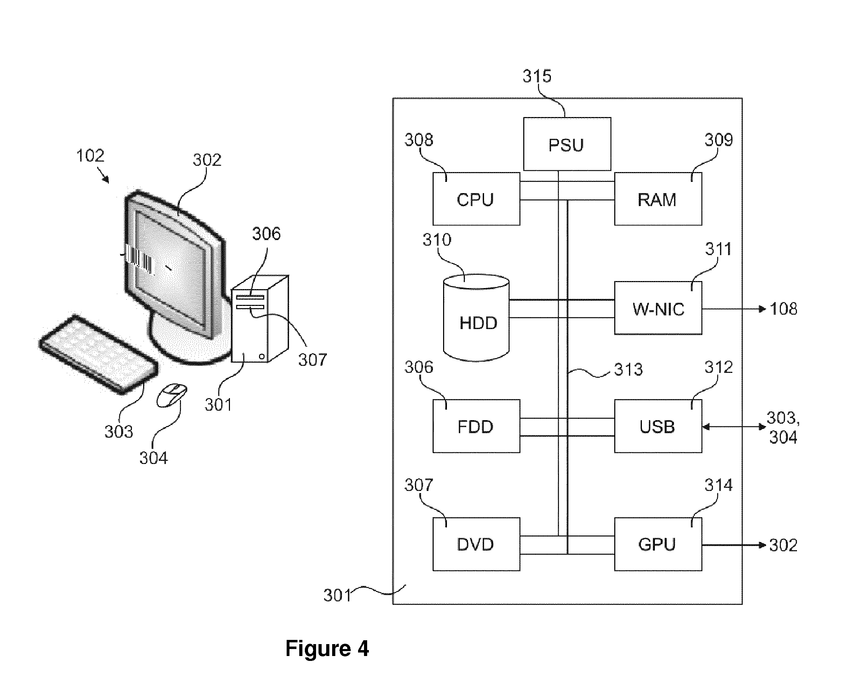

A typical hardware architecture to enable the invention comprises a host terminal in the form of a data processing device 102 is shown in Figure 4 in further detail, by way of non-limitative example.

The data processing device 102 is a computer configured with a data processing unit 301, data outputting means such as video display unit (VDU) 302, data inputting means such as HiD devices, commonly a keyboard 303 and a pointing device (mouse) 304, as well as the VDU 202 itself if it is a touch screen display, and data inputting/outputting means such as a wireless network connection 108, a magnetic data-carrying medium reader/writer 306 and an optical data-carrying medium reader/writer 307.

Within data processing unit 301, a central processing unit (CPU) 308 provides task co-ordination and data processing functionality. Instructions and data for the CPU 308 are stored in memory means 309 and a hard disk storage unit 310 facilitates non-volatile storage of the instructions and the data. A wireless network interface card (NIC) 311 provides the interface to the network connection 108. A universal serial bus (USB) input/output interface 312 facilitates connection to the keyboard and pointing devices 303, 304.

All of the above devices are connected to a data input/output bus 313, to which the magnetic data-carrying medium reader/writer 306 and optical data-carrying medium reader/writer 307 are also connected. A video adapter 314 receives CPU instructions over the bus 313 for outputting processed data to VDU 302. All the components of data processing unit 301 are powered by a power supply unit 315, which receives electrical power from a local mains power source and transforms same according to component ratings and requirements.

In a second deployment, the system and method of the invention can be provisioned on a physical or virtual network cluster of commodity computers or processors.

## Scope of System and Method Usage

It will be appreciated that the system and methodology of the present invention can be deployed in any number of applications that depend on the evaluation of corpora of text with respect to reference categories: authorship attribution, political position estimation, legal text conformity assessment, statistical grammar checking, statistical style checking, assessment and prediction of post-editing changes, etc.

## Embodiments

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A data processing system for analysing text comprising:

    means for modelling two sets of texts comprising a first model derived from a set of reference texts and a second model derived from a set of texts being probed;
    means for comparing text items from the set of texts being probed with reference texts from the set of reference texts using a computationally efficient one pass analysis to provide raw dissimilarity scores; and
    means for classifying the probe texts from the raw dissimilarity scores.

2. The data processing system of claim 1 wherein said one-pass analysis on the set of texts being probed determines the degree of divergence from at least one reference text from the set of reference texts.

3. The data processing system of claims 1 or 2 wherein said means for classifying further comprises ranking the degree of divergence of texts being probed from the set of reference texts using said dissimilarity scores.

4. The data processing system as claimed in any preceding claim wherein said means for classifying comprises means for setting an empirical threshold value such that probed text items with a dissimilarity score with a higher value are texts deemed inaccurate, stylistically deviant, non-conformant, poor quality and/or requiring human assessment and/or correction, and/or wherein said means for comparing comprises comparing distributions of features between at least one probe text and at least one reference text, and then aggregating such comparisons across different categories.

**5.** The data processing system of claim 1 wherein the text item comprises a token, for example a word bigram, such that two texts are subjected to a symmetric comparison of the number of observed and expected occurrences of each type of token in each of the two texts.

**6.** The data processing system of claim 5 comprising means for calculating a suitable dissimilarity metric, by calculating the average chi-square over all of the compared tokens that occur in both texts.

**7.** The data processing system of claim 1 comprising means for aggregating scores by comparing a text with a range of texts, or a range of texts to be probed with a range of reference texts and/or wherein texts may comprise a whole document or part of a document.

**8.** A method of processing data for analysing text comprising the steps of:

modelling two sets of texts comprising a first model derived from a set of reference texts and a second model derived from a set of texts being probed;
comparing text items from the set of texts being probed with reference texts from the set of reference texts using a computationally efficient one pass analysis to provide raw dissimilarity scores; and
classifying the probe texts from the raw dissimilarity scores.

**9.** The method of claim 8 wherein said one-pass analysis on the set of texts being probed determines the degree of divergence from at least one reference text from the set of reference texts.

**10.** The method of claims 8 or 9 wherein said classifying step further comprises ranking the degree of divergence of texts being probed from the set of reference texts using said dissimilarity scores.

**11.** The method as claimed in any of claims 8 to 10 wherein said classifying step further comprises setting an empirical threshold value such that probed text items with a dissimilarity score with a higher value are texts deemed inaccurate, stylistically deviant, non-conformant, poor quality and/or requiring human assessment and/or correction and/or wherein said comparing step comprises comparing distributions of features between at least one probe text and at least one reference text, and then aggregating such comparisons across different categories.

**12.** The method of claim 8 wherein the text item comprises a token, for example a word bigram, such that two texts are subjected to a symmetric comparison of the number of observed and expected occurrences of each type of token in each of the two texts.

**13.** The method of claim 12 comprising calculating a suitable dissimilarity metric, by calculating the average chi-square over all of the compared tokens that occur in both texts.

**14.** The method of claim 8 comprising the step of aggregating scores by comparing a text with a range of texts, or a range of texts to be probed with a range of reference texts and/or wherein texts may comprise a whole document or part of a document.

**15.** A computer program comprising program instructions for causing a computer to perform the method of any of claims 7 to 14.

"Gold Standard" Reference Corpus
(TM, Published, etc.)

Newly Translated Document

Language Model

Compare

Language Model

# Figure 1a

**Figure 1b**

EP 2 535 822 A2

**Figure 2**

CorpusIndex

T.Sentence1 PROBE
T.Sentence2 PROBE
...
T.SentenceN PROBE
GoodTranslation1 Graves
GoodTranslation2 Pope
GoodTranslation3 Pope
GoodTranslation4 Graves

Corpus

Translation

GoodTranslation1
GoodTranslation2
GoodTranslation3
GoodTranslation4

RankTexts
Against
References

(1)

File by Subcategory Rank Sums

T.Sentence1 Graves Last+...
T.Sentence1 Pope (Last−1)+...
...
T.SentenceN Graves ... + ...
A  T.SentenceN Pope ... + ...

Token Sequence
Distribution Indices

Translation.w2

GoodTranslation1.w2
GoodTranslation2.w2
GoodTranslation3.w2
GoodTranslation4.w2

Ranker

(2)

File by File Similarity Measures

T.Sentence1 GoodTranslation1 3.8
T.Sentence1 GoodTranslation4 3.7
...
T.SentenceN GoodTranslation2 0.8
T.SentenceN GoodTranslation4 0.7

Overall Rank−Sum per File

T.Sentence1 (Last)+(Last−1)+...
T.Sentence2 RankSum2
...
B  T.SentenceN RankSumN

File by Subcategory
Rank Sum

File by File Similarity Ranks

T.SentenceN GoodTranslation4 1
T.SentenceN GoodTranslation2 2
...
T.Sentence1 GoodTranslation4 Last−1
T.Sentence1 GoodTranslation1 Last

Aggregate Rank

T.SentenceN 1
T.Sentence2 2
............................................ %rank
C  T.Sentence1 Last                            cut−off

RankMerger

(3)

**Figure 3**

**Figure 4**

EP 2 535 822 A2

## REFERENCES CITED IN THE DESCRIPTION

**Patent documents cited in the description**

• US 2006142993 A

• US 4418951 A

**Non-patent literature cited in the description**

• Computational Stylometry: Who's in a Play?. **CARL VOGEL et al.** Verbal and Nonverbal Features of Human-Human and Human-Machine. Springer, 29 October 2007, 169-186